# EUROPEAN PATENT APPLICATION

(11) **EP 4 391 594 A1**
(43) Date of publication of application: **26.06.2024**
(21) Application number: 22857677.3
(22) Date of filing: 12.08.2022
(51) Int. Cl.: H04W 4/02, H04W 64/00, H04W 84/06, H04W 24/08

(54) **RECOGNITION OF INDOOR OR OUTDOOR SCENARIO, AND POSITIONING OF MOBILE TERMINAL**

(30) Priority: 18.08.2021 CN 202110946653
(71) Applicant: Hangzhou Ezviz Software Co., Ltd., Zhejiang 310051 (CN)
(72) Inventor: XIANG, Bin, Hangzhou, Zhejiang 310051 (CN)
(74) Representative: Goddar, Heinz J.
(86) International application number: PCT/CN2022/111944
(87) International publication number: WO 2023/020365

(57) **Abstract**

The present disclosure relates to identification of an indoor-outdoor scene, and positioning of a mobile terminal. The method for identifying an indoor-outdoor scene, includes: at a side of a mobile terminal, scanning a current network signal to obtain a first information sheet of the current network signal; searching a first database according to the first information sheet; wherein the first database at least stores an information sheet of a wireless local area network and historical positioning data corresponding to the information sheet; the historical positioning data at least comprises satellite positioning success data and satellite positioning failure data; and when a second information sheet matching the first information sheet is found in the first database, identifying the indoor-outdoor scene according to historical positioning data (for example, satellite positioning success data and satellite positioning failure data therein) corresponding to the second information sheet.

## Description

### TECHNICAL FIELD

The present disclosure relates to a field of location identification of a mobile terminal, and in particular to identification of an indoor-outdoor scene and positioning of a mobile terminal.

### BACKGROUND

With popularization and widespread application of mobile terminals, there are usually positioning requirements for the mobile terminals. In view of a fact that a mobile terminal may not be able to find satellites when a satellite positioning function is turned on indoors, resulting in an invalid indoor satellite positioning function and an inaccurate positioning precision range. Usually, the satellite positioning function is used outdoors, and the precision of the satellite positioning function may reach 10 meters. Wireless local area network positioning (for example, WIFI positioning) or a mobile network location service (for example, base station positioning) is used indoors rather than enabling the satellite positioning function, to control battery consumption required by positioning.

Currently, there are methods for identifying an indoor scene including: a manner for identifying a mobile terminal at an indoor entrance, a manner for using an inertial navigation algorithm and map identification, a manner for identifying an indoor scene by using a radio frequency technology, etc. These methods either result in serious misjudgment, or additionally increase hardware costs and software development difficulty of devices.

### SUMMARY

The present disclosure provides a method and apparatus for identifying an indoor-outdoor scene, a method and apparatus for positioning a mobile terminal, a mobile terminal device, and a computer-readable storage medium, which can identify the indoor-outdoor scene without increasing hardware cost and software development difficulty.

The present disclosure provides a method for identifying an indoor-outdoor scene, including: at a side of a mobile terminal, scanning a current network signal to obtain a first information sheet of the current network signal; searching a first database according to the first information sheet, where the first database at least stores an information sheet of a wireless local area network and historical positioning data corresponding to the information sheet, and the historical positioning data at least includes satellite positioning success data and satellite positioning failure data; and when a second information sheet matching the first information sheet is found in the first database, identifying the indoor-outdoor scene according to the second information sheet.

Preferably, identifying the indoor-outdoor scene according to the second information sheet includes: if there is only the satellite positioning success data in historical positioning data corresponding to the second information sheet, determining that a result of identifying the indoor-outdoor scene is an outdoor scene; if there is only the satellite positioning failure data in the historical positioning data corresponding to the second information sheet, determining that the result of identifying the indoor-outdoor scene is an indoor scene; and if there are the satellite positioning success data and the satellite positioning failure data in the historical positioning data corresponding to the second information sheet, determining that the result of identifying the indoor-outdoor scene is the signal being interfered.

Preferably, the first database further stores a machine learning result corresponding to the information sheet, the machine learning result at least includes indoor-outdoor scene information, and identifying the indoor-outdoor scene according to the second information sheet includes: if indoor-outdoor scene information in a machine learning result corresponding to the second information sheet indicates an indoor scene, determining that a result of identifying the indoor-outdoor scene is the indoor scene; and if the indoor-outdoor scene information in the machine learning result corresponding to the second information sheet indicates an outdoor scene, determining that the result of identifying the indoor-outdoor scene is the outdoor scene; where the indoor-outdoor scene information is determined, in a machine learning process, according to the satellite positioning success data and the satellite positioning failure data and/or according to historical satellite positioning information.

Preferably, the first database further stores a validity time threshold to record validity of the machine learning result, and identifying the indoor-outdoor scene according to the second information sheet includes: if the machine learning result corresponding to the second information sheet is within the validity time threshold, identifying the indoor-outdoor scene according to the machine learning result corresponding to the second information sheet; and if the machine learning result corresponding to the second information sheet exceeds the validity time threshold, identifying the indoor-outdoor scene according to satellite positioning success data and satellite positioning failure data corresponding to the second information sheet.

Preferably, the first database further stores the total number of times of positioning and historical satellite positioning information corresponding to the information sheet, and the method further includes: for each information sheet in the first database, when the total number of times of positioning corresponding to the information sheet reaches a configured number of times threshold, triggering following operations to generate a machine learning result corresponding to the information sheet: when there is no historical satellite positioning information corresponding to the information sheet, taking the indoor scene as the indoor-outdoor scene information in the machine learning result; when there is the historical satellite positioning information corresponding to the information sheet, taking the outdoor scene as the indoor-outdoor scene information in the machine learning result; and setting a validity time threshold of a current machine learning result.

The present disclosure further provides a method for positioning a mobile terminal, including: at a side of the mobile terminal, scanning a current network signal to obtain a first information sheet of the current network signal; searching a second database according to the first information sheet; where the second database at least stores an information sheet of a wireless local area network and a machine learning result corresponding to the information sheet; the machine learning result at least includes positioning information obtained after machine learning is performed based on historical positioning data; the historical positioning data at least includes historical wireless local area network positioning information and historical satellite positioning information; and when a second information sheet matching the first information sheet is found in the second database, reading positioning information in a machine learning result corresponding to the second information sheet, and taking the positioning information as a current positioning result.

Preferably, the second database further stores a validity time threshold to record validity of the machine learning result, and reading the positioning information in the machine learning result corresponding to the second information sheet, and taking the positioning information as the current positioning result, includes: if the machine learning result corresponding to the second information sheet is within the validity time threshold, reading the positioning information in the machine learning result corresponding to the second information sheet; and if the machine learning result corresponding to the second information sheet exceeds the validity time threshold, performing indoor-outdoor scene identification, and selecting a positioning manner matching a result of identifying the indoor-outdoor scene to perform positioning.

Preferably, the second database further stores historical positioning data corresponding to the information sheet, the historical positioning data at least includes satellite positioning success data and satellite positioning failure data, and identifying the indoor-outdoor scene includes: identifying the indoor-outdoor scene according to satellite positioning success data and satellite positioning failure data in historical positioning data corresponding to the second information sheet; if there is only the satellite positioning success data in the historical positioning data corresponding to the second information sheet, determining that the result of identifying the indoor-outdoor scene is an outdoor scene; if there is only the satellite positioning failure data in the historical positioning data corresponding to the second information sheet, determining that the result of identifying the indoor-outdoor scene is an indoor scene; and if there are the satellite positioning success data and the satellite positioning failure data in the historical positioning data corresponding to the second information sheet, determining that the result of identifying the indoor-outdoor scene is the signal being interfered.

Preferably, the machine learning result further includes indoor-outdoor scene information, and identifying the indoor-outdoor scene includes: if indoor-outdoor scene information in the machine learning result corresponding to the second information sheet indicates an indoor scene and is valid, determining that the result of identifying the indoor-outdoor scene is the indoor scene; and if the indoor-outdoor scene information in the machine learning result corresponding to the second information sheet indicates an outdoor scene and is valid, determining that the result of identifying the indoor-outdoor scene is the outdoor scene; where the indoor-outdoor scene information is determined according to satellite positioning success data and satellite positioning failure data and/or according to the historical satellite positioning information.

Preferably, the second database further stores the total number of times of positioning, historical satellite positioning information, and the historical wireless local area network positioning information corresponding to the information sheet, and the method further includes: for each information sheet in the second database, when the total number of times of positioning corresponding to the information sheet reaches a configured number of times threshold, triggering following operations to generate a machine learning result corresponding to the information sheet: when there is no historical satellite positioning information corresponding to the information sheet, calculating a first mean value according to all historical wireless local area network positioning information corresponding to the information sheet, removing historical wireless local area network positioning information deviating from the first mean value by reaching a configured first deviation threshold, calculating a mean value of remaining historical wireless local area network positioning information as the positioning information in the machine learning result, and taking the indoor scene as the indoor-outdoor scene information in the machine learning result; when there is the historical satellite positioning information corresponding to the information sheet, or there are the historical wireless local area network positioning information and the historical satellite positioning information corresponding to the information sheet, calculating a second mean value according to all historical satellite positioning information corresponding to the information sheet, removing historical satellite positioning information deviating from the second mean value by reaching a configured second deviation threshold, calculating a mean value of remaining historical satellite positioning information as the positioning information in the machine learning result, and taking the outdoor scene as the indoor-outdoor scene information in the machine learning result; and setting a validity time threshold of a current machine learning result.

The present disclosure further provides an apparatus for identifying an indoor-outdoor scene, including a memory and a processor. The memory stores a computer program, and the processor is configured for executing the computer program to implement steps of any one method for identifying an indoor-outdoor scene.

The present disclosure still provides an apparatus for positioning a mobile terminal, including a memory and a processor. The memory stores a computer program, and the processor is configured for executing the computer program to implement steps of any one method for positioning a mobile terminal.

The present disclosure yet provides a mobile terminal device, including a memory and a processor. The memory stores a computer program, and the processor is configured for executing the computer program to implement steps of any one method for identifying an indoor-outdoor scene and/or steps of any one method for positioning a mobile terminal.

The present disclosure yet provides a computer-readable storage medium. The computer-readable storage medium stores a computer program. The computer program, when executed by a processor, implements steps of any one method for identifying an indoor-outdoor scene and/or steps of any one method for positioning a mobile terminal.

According to the method for identifying an indoor-outdoor scene provided by the present disclosure, the indoor-outdoor scene is identified by analyzing the historical positioning data, and the identification accuracy and reliability are effectively improved without increasing additional hardware cost. Further, it is conducive to improving the accuracy of the result of identifying, by performing the machine learning on the historical positioning data; and positioning is performed in combination with the result of identifying, which effectively reduces the power consumption of the terminal device, and accelerates the positioning speed.

### BRIEF DESCRIPTION OF DRAWINGS

FIG. 1 is a schematic flowchart of a method for identifying an indoor-outdoor scene provided by an embodiment of the present disclosure.
FIG. 2 is a schematic flowchart of a method for identifying an indoor-outdoor scene provided by an embodiment of the present disclosure.
FIG. 3 is a schematic flowchart of a method for identifying an indoor-outdoor scene provided by an embodiment of the present disclosure.
FIG. 4 is a schematic flowchart of a method for positioning a mobile terminal provided by an embodiment of the present disclosure.
FIG. 5 is a schematic flowchart of a method for positioning a mobile terminal provided by an embodiment of the present disclosure.
FIG. 6 is a schematic flowchart of positioning a mobile terminal provided by an embodiment of the present disclosure.
FIG. 7 is a schematic flowchart of performing machine learning based on a database provided by an embodiment of the present disclosure.
FIG. 8 is a schematic flowchart of data verification provided by an embodiment of the present disclosure.
FIG. 9 is a schematic diagram of an apparatus of identifying an indoor-outdoor scene provided by an embodiment of the present disclosure.
FIG. 10 is a schematic flowchart of an apparatus for positioning a mobile terminal provided by an embodiment of the present disclosure.
FIG. 11 is a schematic flowchart of an apparatus for positioning a mobile terminal provided by an embodiment of the present disclosure.
FIG. 12 is a schematic flowchart of a mobile terminal device provided by an embodiment of the present disclosure.

### DETAILED DESCRIPTION

To make objectives, technical means, and advantages of the present disclosure clearer and more understandable, the present disclosure is further described in detail below with reference to accompanying drawings.

The applicant has found that, generally, when a user uses the positioning function, the user uses an application program at the side of the mobile terminal to send a positioning command, and the mobile terminal executes the positioning function after receiving the positioning command. When the mobile terminal is indoors, the wireless local area network positioning or the mobile network location service positioning is started only; and when the mobile terminal is outdoors, the wireless local area network positioning or the mobile network location service positioning and the satellite positioning are started. In view of a large deviation of the wireless local area network positioning or the mobile network location service positioning in an open outdoor environment, the satellite positioning is mainly used for outdoor positioning. Among results returned by the multiple positioning manners, longitude and latitude data with the highest precision may be used as a positioning result. Different positioning manners are used in the indoor-outdoor scene, such that there is a requirement to identify the indoor and/or outdoor scenes in a positioning process.

In the present disclosure, the indoor-outdoor scene is identified by using historical positioning data, and a matched positioning manner is used based on the result of the identifying, which not only reduces the power consumption of the mobile terminal, but also helps to accelerate the positioning speed.

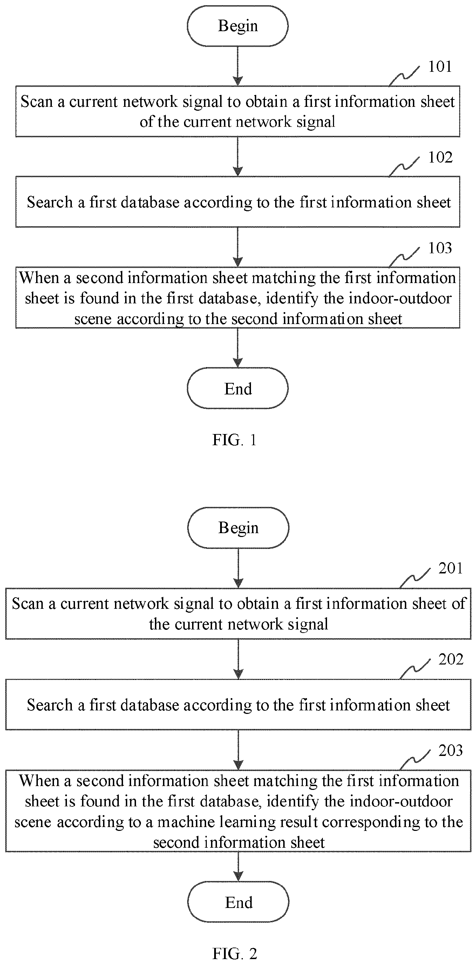

Referring to FIG. 1, FIG. 1 is a schematic flowchart of a method for identifying an indoor-outdoor scene provided by an embodiment of the present disclosure. The method for identifying an indoor-outdoor scene includes following steps 101 to 103 performed at the side of the mobile terminal.

At step 101, a current network signal is scanned to obtain a first information sheet of the current network signal.

At step 102, a first database is searched according to the first information sheet. The first database at least stores an information sheet of a wireless local area network and historical positioning data corresponding to the information sheet. The historical positioning data at least includes satellite positioning success data for recording the number of times of satellite positioning success and satellite positioning failure data for recording the number of times of satellite positioning failure.

The information recorded in the first database may be shown in Table 1 below.

**Table 1**

| information sheet (list) | historical positioning data | |
|---|---|---|
| | satellite positioning success data | satellite positioning failure data |
| information sheet 1 of wireless local area network | the number of times of satellite positioning success | the number of times of satellite positioning failure |
| ... | ... | ... |
| information sheet n of wireless local area network | the number of times of satellite positioning success | the number of times of satellite positioning failure |

At step 103, when a second information sheet matching the first information sheet is found in the first database, the indoor-outdoor scene is identified according to the second information sheet.

Specifically, if there is only the satellite positioning success data in historical positioning data corresponding to the second information sheet, the terminal determines that a result of identifying the indoor-outdoor scene is an outdoor scene. If there is only the satellite positioning failure data in the historical positioning data corresponding to the second information sheet, the terminal determines that the result of identifying the indoor-outdoor scene is an indoor scene. If there are the satellite positioning success data and the satellite positioning failure data in the historical positioning data corresponding to the second information sheet, the terminal determines that the result of identifying the indoor-outdoor scene is the signal being interfered.

To improve accuracy and reliability of the result of identifying, the first database may also store a machine learning result corresponding to the information sheet. The machine learning result at least includes indoor-outdoor scene information. The information recorded in the first database may be shown in Table 2 below.

**Table 2**

| information sheet | historical positioning data | | machine learning result |
|---|---|---|---|
| | satellite positioning success data | satellite positioning failure data | |
| information sheet 1 of wireless local area network | the number of times of satellite positioning success | the number of times of satellite positioning failure | indoor-outdoor scene information |
| ... | ... | ... | ... |
| information sheet n of wireless local area network | the number of times of satellite positioning success | the number of times of satellite positioning failure | indoor-outdoor scene information |

Based on the first database shown in Table 2, as another implementation, referring to FIG. 2, FIG. 2 is a schematic flowchart of a method for identifying an indoor-outdoor scene provided by an embodiment of the present disclosure. The method for identifying an indoor-outdoor scene includes following steps 201 to 203 performed at the side of the mobile terminal.

At step 201, a current network signal is scanned to obtain a first information sheet of the current network signal. Specific description of this step may refer to the above description of step 101, and will not be repeated here.

At step 202, a first database is searched according to the first information sheet. Specific description of this step may refer to the above description of step 102, and will not be repeated here.

At step 203, when a second information sheet matching the first information sheet is found in the first database, the indoor-outdoor scene is identified according to a machine learning result corresponding to the second information sheet.

Specifically, if indoor-outdoor scene information in a machine learning result corresponding to the second information sheet indicates an indoor scene, the mobile terminal determines that a result of identifying the indoor-outdoor scene is the indoor scene; and if the indoor-outdoor scene information in the machine learning result corresponding to the second information sheet indicates an outdoor scene, the mobile terminal determines that the result of identifying the indoor-outdoor scene is the outdoor scene.

In this embodiment, the machine learning is performed based on the historical satellite positioning data, the indoor or outdoor scene where the mobile terminal is currently located is identified by analyzing the historical satellite positioning data, which effectively improves the accuracy and reliability of identifying the indoor-outdoor scene, and is conducive to improving the identification speed.

Preferably, the first database may also store a validity time threshold to record validity of a machine learning result corresponding to each of information sheets. Optionally, the first database also stores the total number of times of positioning and historical satellite positioning information corresponding to the information sheet, as shown in Table 3 below.

**Table 3**

| information sheet | historical positioning data | | historical satellite positioning information | machine learning result | validity time threshold | the total number of times of positioning |
|---|---|---|---|---|---|---|
| | satellite positioning success data | satellite positioning failure data | | | | |
| information sheet 1 of wireless local area network | the number of times of satellite positioning success | the number of times of satellite positioning failure | | indoor-outdoor scene information | | |
| ... | ... | ... | | ... | | |
| information sheet n of wireless local area network | the number of times of satellite positioning success | the number of times of satellite positioning failure | | indoor-outdoor scene information | | |

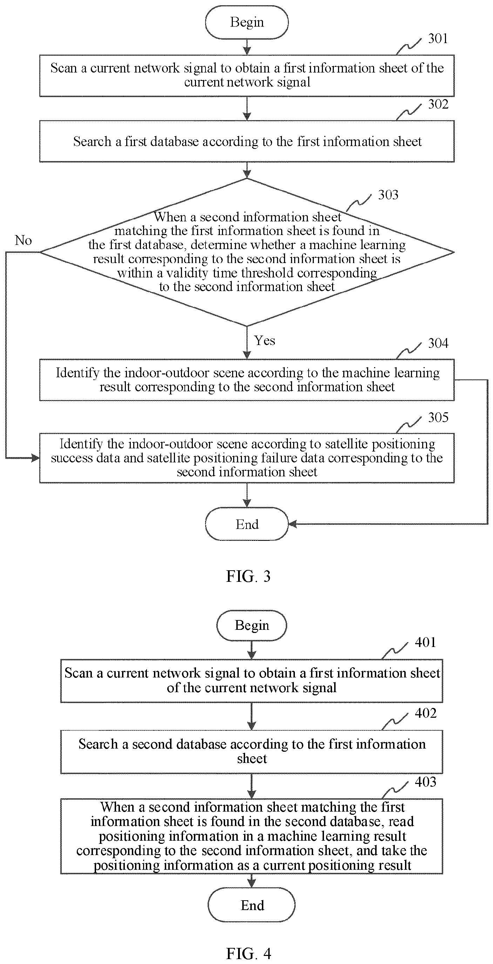

Based on the first database shown in Table 3, as another implementation, referring to FIG. 3, FIG. 3 is a schematic flowchart of a method for identifying an indoor-outdoor scene provided by an embodiment of the present disclosure. The method for identifying an indoor-outdoor scene includes following steps 301 to 305 performed at the side of the mobile terminal.

At step 301, a current network signal is scanned to obtain a first information sheet of the current network signal. Specific description of this step may refer to the above description of step 101, and will not be repeated here.

At step 302, a first database is searched according to the first information sheet. Specific description of this step may refer to the above description of step 102, and will not be repeated here.

At step 303, when a second information sheet matching the first information sheet is found in the first database, it is determined whether a machine learning result corresponding to the second information sheet is within a validity time threshold corresponding to the second information sheet.

At step 304, if the machine learning result corresponding to the second information sheet is within the validity time threshold corresponding to the second information sheet, the indoor-outdoor scene is identified according to the machine learning result corresponding to the second information sheet.

At step 305, if the machine learning result corresponding to the second information sheet exceeds the validity time threshold corresponding to the second information sheet, the indoor-outdoor scene is identified according to satellite positioning success data and satellite positioning failure data corresponding to the second information sheet.

The machine learning may be triggered when the total number of times of positioning corresponding to a certain information sheet reaches a configured number of times threshold. The machine learning may include: for each information sheet, when there is no historical satellite positioning information corresponding to the information sheet, taking the indoor scene as the indoor-outdoor scene information in the machine learning result; when there is the historical satellite positioning information corresponding to the information sheet, taking the outdoor scene as the indoor-outdoor scene information in the machine learning result; and setting a validity time threshold of a current machine learning result.

In this embodiment, according to a validity situation of the machine learning result, different manners are used to identify the indoor-outdoor scene, which is conducive to improving the accuracy and reliability of identifying the indoor-outdoor scene.

Referring to FIG. 4, FIG. 4 is a schematic flowchart of a method for positioning a mobile terminal provided by an embodiment of the present disclosure. The method for positioning a mobile terminal includes following steps 401 to 403 performed at the side of the mobile terminal.

At step 401, a current network signal is scanned to obtain a first information sheet of the current network signal.

At step 402, a second database is searched according to the first information sheet. The second database at least stores an information sheet of a wireless local area network and a machine learning result corresponding to the information sheet. The machine learning result at least includes positioning information obtained after machine learning is performed based on historical positioning data. The historical positioning data at least includes historical wireless local area network positioning information and historical satellite positioning information.

The information recorded in the second database is shown in Table 4 below.

**Table 4**

| information sheet | machine learning result |
|---|---|
| information sheet 1 of wireless local area network | positioning information |
| ... | ... |
| information sheet n of wireless local area network | positioning information |

At step 403, when a second information sheet matching the first information sheet is found in the second database, positioning information in a machine learning result corresponding to the second information sheet is read, and the positioning information is taken as a current positioning result.

According to the method for positioning a mobile terminal in this embodiment, the positioning information, obtained after the machine learning is performed on historical positioning data, is used as the positioning result, which accelerates the positioning speed and reduces the power consumption of the mobile terminal.

Preferably, the second database may also store a validity time threshold to record validity of a machine learning result corresponding to each of information sheets. The information recorded in the second database is shown in Table 5 below.

**Table 5**

| information sheet | machine learning result | validity time threshold |
|---|---|---|
| information sheet 1 of wireless local area network | positioning information | |
| ... | ... | |
| information sheet n of wireless local area network | positioning information | |

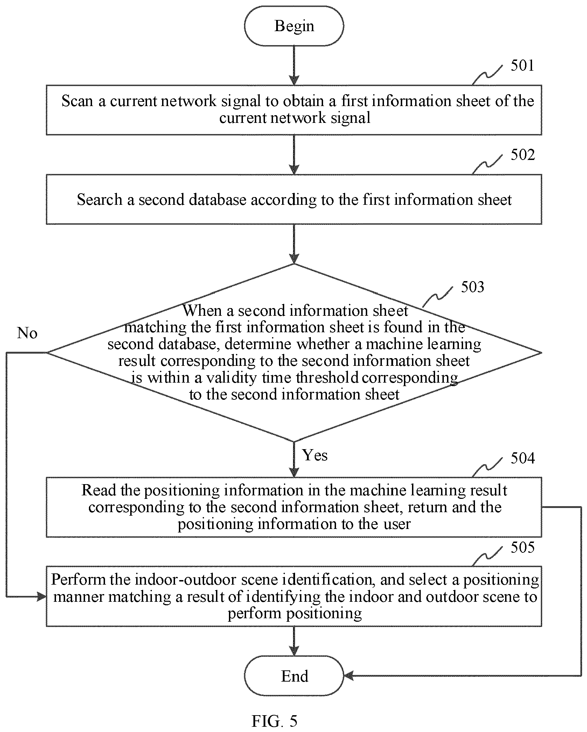

Based on the second database shown in Table 5, as another implementation, referring to FIG. 5, FIG. 5 is a schematic flowchart of a method for positioning a mobile terminal provided by an embodiment of the present disclosure. The method for positioning a mobile terminal includes following steps 501 to 505 performed at the side of the mobile terminal.

At step 501, a current network signal is scanned to obtain a first information sheet of the current network signal. Specific description of this step may refer to the above description of step 401, and will not be repeated here.

At step 502, a second database is searched according to the first information sheet. Specific description of this step may refer to the above description of step 402, and will not be repeated here.

At step 503, when a second information sheet matching the first information sheet is found in the second database, it is determined whether a machine learning result corresponding to the second information sheet is within a validity time threshold corresponding to the second information sheet.

At step 504, if the machine learning result corresponding to the second information sheet is within the validity time threshold corresponding to the second information sheet, the positioning information in the machine learning result corresponding to the second information sheet is read, and the positioning information is returned to the user.

At step 505, if the machine learning result corresponding to the second information sheet exceeds the validity time threshold corresponding to the second information sheet, the indoor-outdoor scene identification is performed, and a positioning manner matching a result of identifying the indoor-outdoor scene is selected to perform positioning.

Manners for positioning the indoor scene include the wireless local area network positioning and/or the mobile network location service positioning, and manners for positioning the outdoor scene include one of or any combination of the wireless local area network positioning, the mobile network location service positioning, and the satellite positioning.

According to the method for positioning a mobile terminal in this embodiment, the satellite positioning can be selectively enabled according to the result of identifying the indoor-outdoor scene in the positioning process, thereby greatly reducing the power consumption of the terminal device and accelerating the positioning speed.

As another implementation, the second database may also store the total number of times of positioning, historical satellite positioning information, and the historical wireless local area network positioning information corresponding to the information sheet, as shown in Table 6 below.

**Table 6**

| information sheet | historical satellite positioning information | historical wireless local area network positioning information | machine learning result | validity time threshold | the total number of times of positioning |
|---|---|---|---|---|---|
| information sheet 1 of wireless local area network | | | positioning information | | |
| ... | | | ... | | |
| information sheet n of wireless local area network | | | positioning information | | |

The machine learning may be triggered when the total number of times of positioning corresponding to a certain information sheet reaches a configured number of times threshold. The machine learning may include: for each information sheet, when there is no historical satellite positioning information corresponding to the information sheet, calculating a first mean value according to all historical wireless local area network positioning information corresponding to the information sheet, removing historical wireless local area network positioning information deviating from the first mean value by reaching a configured first deviation threshold, calculating a mean value of remaining historical wireless local area network positioning information as the positioning information in the machine learning result, and taking the indoor scene as the indoor-outdoor scene information in the machine learning result; when there is the historical satellite positioning information corresponding to the information sheet, or there are the historical wireless local area network positioning information and the historical satellite positioning information corresponding to the information sheet, calculating a second mean value according to all historical satellite positioning information corresponding to the information sheet, removing historical satellite positioning information deviating from the second mean value by reaching a configured second deviation threshold, calculating a mean value of remaining historical satellite positioning information as the positioning information in the machine learning result, and taking the outdoor scene as the indoor-outdoor scene information in the machine learning result; and setting a validity time threshold of a current machine learning result.

For the convenience of understanding the present disclosure, a WIFI positioning manner in wireless local area network positioning and base station positioning in mobile network location service positioning are taken as examples for description below.

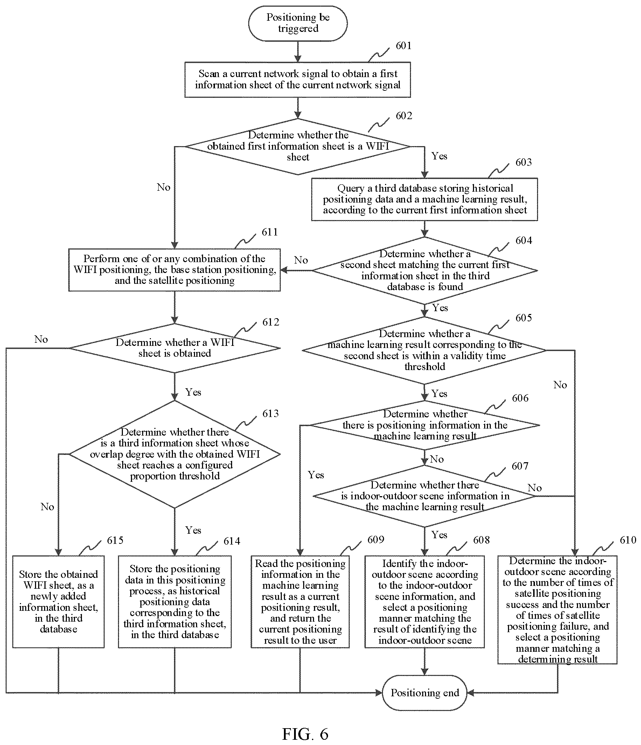

Referring to FIG. 6, FIG. 6 is a schematic flowchart of positioning a mobile terminal provided by an embodiment of the present disclosure. At the side of the mobile terminal, when the positioning is triggered, the method for positioning a mobile terminal includes following steps 601 to 615.

At step 601, a current network signal is scanned to obtain a first information sheet of the current network signal.

When the current network signal is a WIFI signal, the first information sheet is a WIFI sheet, and includes an MAC address and a signal strength. When the current network signal is a base station signal, the first information sheet is a base station sheet, and includes base station information and the signal strength.

At step 602, it is determined whether the obtained first information sheet is a WIFI sheet; if the obtained first information sheet is the WIFI sheet, step 603 is performed; and if the obtained first information sheet is not the WIFI sheet, step 611 is performed.

At step 603, a third database storing historical positioning data and a machine learning result is queried according to the current first information sheet.

At step 604, it is determined whether a second sheet matching the current first information sheet in the third database is found; if the second sheet matching the current first information sheet in the third database is found, step 605 is performed; and if the second sheet matching the current first information sheet in the third database is not found, step 611 is performed.

At step 605, it is determined whether a machine learning result corresponding to the second sheet is within a validity time threshold; if the machine learning result corresponding to the second sheet is within the validity time threshold, step 606 is performed; and if the machine learning result corresponding to the second sheet is not within the validity time threshold, step 610 is performed.

At step 606, it is determined whether there is positioning information in the machine learning result; if there is no positioning information in the machine learning result, step 607 is performed; and if there is the positioning information in the machine learning result, step 609 is performed.

At step 607, it is determined whether there is indoor-outdoor scene information in the machine learning result; if there is the indoor-outdoor scene information in the machine learning result, step 608 is performed; and if there is no indoor-outdoor scene information in the machine learning result, step 610 is performed.

At step 608, the indoor-outdoor scene is identified according to the indoor-outdoor scene information, and a positioning manner matching the result of identifying the indoor-outdoor scene is selected.

Specifically, if the indoor-outdoor scene information in the machine learning result is the indoor scene, an indoor positioning manner is selected, that is, the base station positioning and the WIFI positioning may be performed, rather than the satellite positioning; and if the indoor-outdoor scene information in the machine learning result is the outdoor scene, an outdoor positioning manner is selected, that is, the base station positioning, the WIFI positioning, and the satellite positioning may be performed. Further, a final positioning result is returned to the user, and this positioning ends.

At step 609, the positioning information in the machine learning result is read as a current positioning result, and the current positioning result is returned to the user.

At step 610, the indoor-outdoor scene is determined according to the number of times of satellite positioning success and the number of times of satellite positioning failure, and a positioning manner matching a determining result is selected.

Specifically, if the number of times of satellite positioning success is 0 and the number of times of satellite positioning failure is not 0, the indoor-outdoor scene is determined as the indoor scene, and the indoor positioning manner is selected to perform positioning. If the number of times of satellite positioning failure is 0 and the number of times of satellite positioning success is not 0, the indoor-outdoor scene is determined as the outdoor scene, and the outdoor positioning manner is selected to perform positioning. If the number of times of satellite positioning success is not 0 and the number of times of satellite positioning failure is not 0, it is determined that the signal is poor, and the process returns to perform step 601.

At step 611, one of or any combination of the WIFI positioning, the base station positioning, and the satellite positioning is performed.

At step 612, it is determined whether a WIFI sheet is obtained; if the WIFI sheet is obtained, step 613 is performed; and if the WIFI sheet is not obtained, this positioning ends.

At step 613, it is determined whether there is a third information sheet whose overlap degree with the obtained WIFI sheet reaches a configured proportion threshold in the third database; if there is the third information sheet reaches the configured proportion threshold in the third database, step 614 is performed; and if there is no third information sheet reaches the configured proportion threshold in the third database, step 615 is performed.

At step 614, the positioning data in this positioning process is stored, as historical positioning data corresponding to the third information sheet, in the third database.

At step 615, the obtained WIFI sheet is stored, as a newly added information sheet, in the third database.

Specifically, when the WIFI sheet is obtained, the obtained WIFI sheet is taken as an information sheet to be saved, and it is determined whether the overlap degree between the information sheet to be saved and any information sheet in the third database reaches the configured proportion threshold. If the overlap degree reaches the configured proportion threshold, it indicates that there is a third information sheet whose overlap degree reaches the proportion threshold in the third database, the positioning data in this positioning process is stored in the third database as the historical positioning data corresponding to the third information sheet. If the overlap degree does not reach the configured proportion threshold, it indicates that there is no third information sheet whose overlap degree reaches the proportion threshold in the third database, the obtained WIFI sheet is stored, as a newly added information sheet, in the information sheets in the third database.

The third database at least includes a field for storing the WIFI sheet, a field for historical WIFI positioning information corresponding to the WIFI sheet, a field for storing the number of times of satellite positioning success, a field for storing the historical positioning data, and a field for storing the number of times of satellite positioning failure. The positioning information includes longitude and latitude information and positioning precision information.

Preferably, the third database may also include a field for storing a machine learning result of machine learning performed on the historical positioning data. The machine learning result includes the indoor-outdoor scene information and the positioning information. The third database may also include a field for storing a validity time threshold of the machine learning result, and a field for recording the number of times of positioning.

Referring to Table 7 below, Table 7 shows information of various fields recorded in the third database.

**Table 7**

| field 1 | field 2 | field 3 | field 4 | field 5 | field 6 | field 7 | field 8 |
|---|---|---|---|---|---|---|---|
| WIFI sheet 1 (MAC address, signal strength) | historical WIFI positioning information (longitude and latitude information, positioning precision information) | the number of times of satellite positioning success | historical satellite positioning information (longitude and latitude information, positioning precision information) | the number of times of satellite positioning failure | machine learning result (indoor-outdoor scene information, positioning information) | validity time threshold of machine learning result | the total number of times of positioning |
| ... | ... | ... | ... | ... | ... | ... | ... |
| WIFI sheet n (MAC address, signal strength) | historical WIFI positioning information (longitude and latitude information, positioning precision information) | the number of times of satellite positioning success | historical satellite positioning information (longitude and latitude information, positioning precision information) | the number of times of satellite positioning failure | machine learning result (indoor-outdoor scene information, positioning information) | validity time threshold of machine learning result | the total number of times of positioning |

The third database includes follow fields.

Field 1 is a key field. When the overlap degree between the information sheet to be saved and the current information sheet reaches the configured proportion threshold (for example, 50%), a positioning result corresponding to the information sheet to be saved is stored in the key field.

For example, a WIFI sheet A is scanned at a location A, and positioning data A is obtained, assuming that the WIFI sheet A and the positioning data A have been stored in the database. A WIFI sheet B is scanned at a location B, and positioning data B is obtained. When the location A is close to the location B, the overlap degree between the WIFI sheet B and the WIFI sheet A reaches the configured proportion threshold, and the positioning data B is stored in the field corresponding to the WIFI sheet A.

Field 2 is historical wireless local area network positioning information, and is used to save all data that matches the database table key, which can be used for machine learning.

Field 3 is the number of times of satellite positioning success. When the current positioning has satellite positioning, the value of the field is increased by 1 for each success.

Field 4 is historical satellite positioning information. When the current positioning has satellite positioning and is successful, data is stored in the field.

Field 5 is the number of times of satellite positioning failure. When the current positioning has satellite positioning and fails, the value of the field is increased by 1 for each failure.

Field 6 is a machine learning result. The machine learning result data based on information in field 2 and field 4 is saved in the field.

Field 7 is a validity time threshold of the machine learning result. After the machine learning is successful, a validity time threshold is configured, for example, 7 days.

Field 8 is the total number of times of positioning. The value of the field is increased by 1 for each positioning.

The data stored in the third database is collected in each positioning process. For example, periodic wake-up positioning, mobile terminal timed wake-up positioning, active positioning triggered by a user, active positioning initiated by the mobile terminal to collect information, and positioning initiated by the mobile terminal according to user configuration information will trigger a positioning process. One of or any combination of the base station positioning, the WIFI positioning, and the satellite positioning is performed in each positioning process.

The data collected in each positioning process includes a WIFI sheet scanned when a WIFI positioning manner is used, positioning information in the WIFI positioning manner, positioning information when a satellite positioning manner is used, and the number of times of positioning success and the number of times of positioning failure in the current positioning process. The collected data is stored in a corresponding field of the information sheet by using the information sheet as a key field.

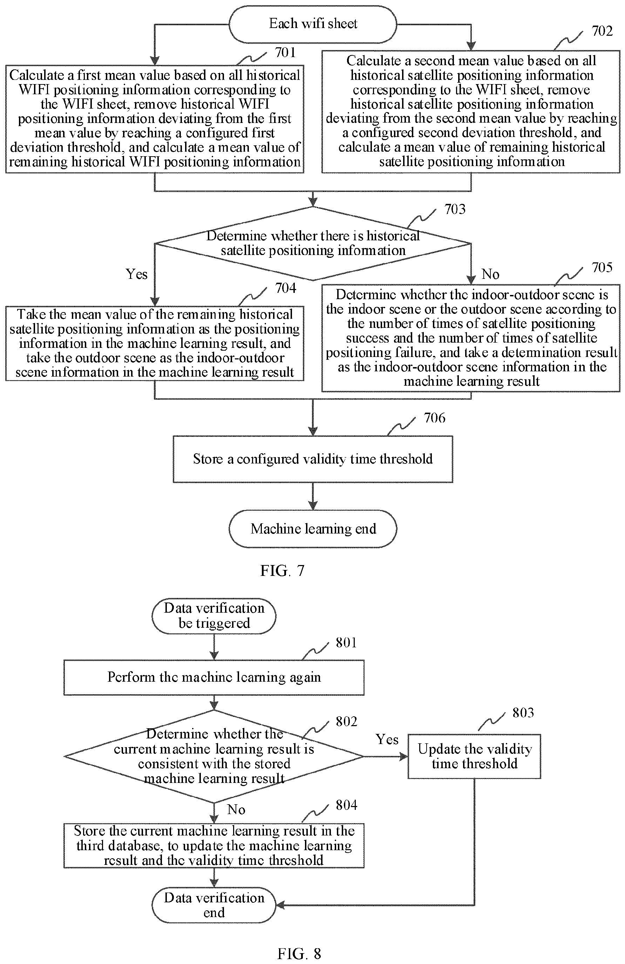

For each WIFI sheet, when the total number of times of positioning corresponding to the WIFI sheet reaches a configured number of times threshold, performing of the machine learning is triggered. Referring to FIG. 7, FIG. 7 is a schematic flowchart of performing machine learning based on a database provided by an embodiment of the present disclosure. For each WIFI sheet, the machine learning includes following steps 701 to 706.

At step 701, a first mean value is calculated based on all historical WIFI positioning information corresponding to the WIFI sheet, historical WIFI positioning information deviating from the first mean value by reaching a configured first deviation threshold is removed, and a mean value of remaining historical WIFI positioning information is calculated. The mean value of the historical WIFI positioning information includes a longitude and latitude mean value and a precision mean value.

At step 702, a second mean value is calculated based on all historical satellite positioning information corresponding to the WIFI sheet, historical satellite positioning information deviating from the second mean value by reaching a configured second deviation threshold is removed, and a mean value of remaining historical satellite positioning information is calculated. The first deviation threshold may be different from the second deviation threshold.

At step 703, it is determined whether there is historical satellite positioning information; if there is the historical satellite positioning information, step 704 is performed; and if there is no historical satellite positioning information, step 705 is performed.

At step 704, the mean value of the remaining historical satellite positioning information is taken as the positioning information in the machine learning result, and the outdoor scene is taken as the indoor-outdoor scene information in the machine learning result.

At step 705, it is determined whether the indoor-outdoor scene is the indoor scene or the outdoor scene according to the number of times of satellite positioning success and the number of times of satellite positioning failure, and a determination result is taken as the indoor-outdoor scene information in the machine learning result.

Specifically, if the number of times of satellite positioning success is 0 and the number of times of satellite positioning failure is not 0, the indoor scene is taken as the indoor-outdoor scene information in the machine learning result; if the number of times of satellite positioning failure is 0 and the number of times of satellite positioning success is not 0, the outdoor scene is taken as the indoor-outdoor scene information in the machine learning result; and if the number of times of satellite positioning success is not 0 and the number of times of satellite positioning failure is not 0, it is determined that the signal is poor. The positioning information and the indoor-outdoor scene information in the machine learning result are saved in field 6.

At step 706, a configured validity time threshold is stored. Specifically, after the machine learning result is obtained, the configured validity time threshold is stored in field 7, and this machine learning ends.

If the machine learning result has exceeded the validity time threshold and the overlap degree between the current first information sheet and a certain information sheet in the third database reaches a configured proportion threshold, it indicates that the mobile terminal has been located at a historical location where the positioning information has been obtained. For example, the mobile terminal is located at the same location again, and data verification is triggered.

Referring to FIG. 8, FIG. 8 is a schematic flowchart of data verification provided by an embodiment of the present disclosure. When the data verification is triggered, the data verification includes following steps 801 to 804.

At step 801, the machine learning is performed again.

At step 802, it is determined whether the current machine learning result is consistent with the stored machine learning result; if the current machine learning result is consistent with the stored machine learning result, step 803 is performed; and if the current machine learning result is not consistent with the stored machine learning result, step 804 is performed.

At step 803, the validity time threshold is updated.

At step 804, the current machine learning result is stored in the third database, to update the machine learning result and the validity time threshold.

In this embodiment, by using the historical positioning data and the machine learning result in the third database, not only the indoor-outdoor scene can be efficiently identified, but also positioning can be performed in a matched positioning manner based on the result of identifying the indoor-outdoor scene, thereby avoiding the power consumption caused by starting the satellite positioning in the indoor scene, and improving the positioning speed.

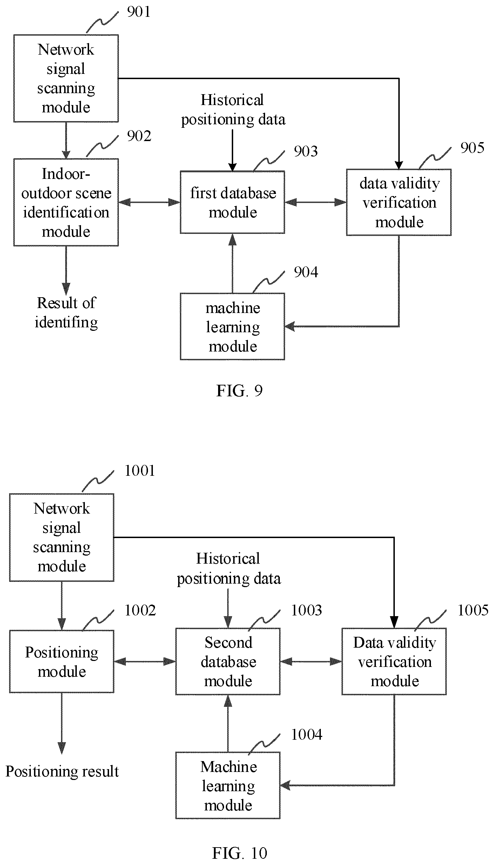

Referring to FIG. 9, FIG. 9 is a schematic diagram of an apparatus of identifying an indoor-outdoor scene provided by an embodiment of the present disclosure. The apparatus of identifying an indoor-outdoor scene includes:
a network signal scanning module 901, configured for scanning a current network signal to obtain a first information sheet of the current network signal;
an indoor-outdoor scene identification module 902, configured for searching a first database storing historical positioning data corresponding to at least one information sheet according to the first information sheet; when a second information sheet matching the first information sheet is found in the first database, identifying the indoor-outdoor scene according to satellite positioning success data and satellite positioning failure data corresponding to the second information sheet; and
a first database module 903, configured for storing the first database; where the first database at least stores an information sheet of a wireless local area network and historical positioning data corresponding to the information sheet; the historical positioning data at least includes satellite positioning success data and satellite positioning failure data.

Preferably, the apparatus of identifying an indoor-outdoor scene further includes: a machine learning module 904, configured for, for each information sheet in the first database, when the total number of times of positioning corresponding to the information sheet reaches a configured number of times threshold, triggering following operations to generate a machine learning result corresponding to the information sheet: when there is no historical satellite positioning information corresponding to the information sheet, taking the indoor scene as the indoor-outdoor scene information in the machine learning result; when there is the historical satellite positioning information corresponding to the information sheet, taking the outdoor scene as the indoor-outdoor scene information in the machine learning result; and setting a validity time threshold of a current machine learning result.

Preferably, the apparatus of identifying an indoor-outdoor scene further includes: a data validity verification module 905, configured for detecting validity of the machine learning result in the first database; when the validity time threshold of the machine learning result is not met and the overlap degree between the current first information sheet and a certain information sheet in the third database reaches the configured proportion threshold, notifying the machine learning module 904 to perform machine learning; comparing the current machine learning result with the machine learning result stored in the first database; if the current machine learning result is consistent with the machine learning result stored in the first database, resetting the validity time threshold of the machine learning result; if the current machine learning result is not consistent with the machine learning result stored in the first database, notifying the machine learning module 904 to save the current machine learning result in the first database.

Referring to FIG. 10, FIG. 10 is a schematic flowchart of an apparatus for positioning a mobile terminal provided by an embodiment of the present disclosure. The apparatus for positioning a mobile terminal includes:
a network signal scanning module 1001, configured for scanning a current network signal to obtain a first information sheet of the current network signal;
a positioning module 1002, configured for searching a second database storing positioning information corresponding to at least one information sheet according to the first information sheet; when a second information sheet matching the first information sheet is found in the second database, reading positioning information in a machine learning result corresponding to the second information sheet, and taking the positioning information as a current positioning result; and
a second database module 1003, configured for storing the second database, where the second database at least stores an information sheet of a wireless local area network and a machine learning result corresponding to the information sheet; the machine learning result at least includes positioning information obtained after machine learning is performed based on historical positioning data; the historical positioning data at least includes historical wireless local area network positioning information and historical satellite positioning information.

Preferably, the apparatus for positioning a mobile terminal further includes: a machine learning module 1004, configured for, for each information sheet in the second database, when the total number of times of positioning corresponding to the information sheet reaches a configured number of times threshold, triggering following operations to generate a machine learning result corresponding to the information sheet: when there is no historical satellite positioning information corresponding to the information sheet, calculating a first mean value according to all historical wireless local area network positioning information corresponding to the information sheet, removing historical wireless local area network positioning information deviating from the first mean value by reaching a configured first deviation threshold, calculating a mean value of remaining historical wireless local area network positioning information as the positioning information in the machine learning result, and taking the indoor scene as the indoor-outdoor scene information in the machine learning result; when there is the historical satellite positioning information corresponding to the information sheet, or there are the historical wireless local area network positioning information and the historical satellite positioning information corresponding to the information sheet, calculating a second mean value according to all historical satellite positioning information corresponding to the information sheet, removing historical satellite positioning information deviating from the second mean value by reaching a configured second deviation threshold, calculating a mean value of remaining historical satellite positioning information as the positioning information in the machine learning result, and taking the outdoor scene as the indoor-outdoor scene information in the machine learning result; and setting a validity time threshold of a current machine learning result.

Similarly, the apparatus for positioning a mobile terminal further includes: a data validity verification module 1005, configured for detecting validity of the machine learning result in the second database; when the validity time threshold of the machine learning result is not met and the overlap degree between the current first information sheet and a certain information sheet in the third database reaches the configured proportion threshold, notifying the machine learning module 1004 to perform machine learning; comparing the current machine learning result with the machine learning result stored in the first database; if the current machine learning result is consistent with the machine learning result stored in the first database, resetting the validity time threshold of the machine learning result; if the current machine learning result is not consistent with the machine learning result stored in the first database, notifying the machine learning module 1004 to save the current machine learning result in the first database.

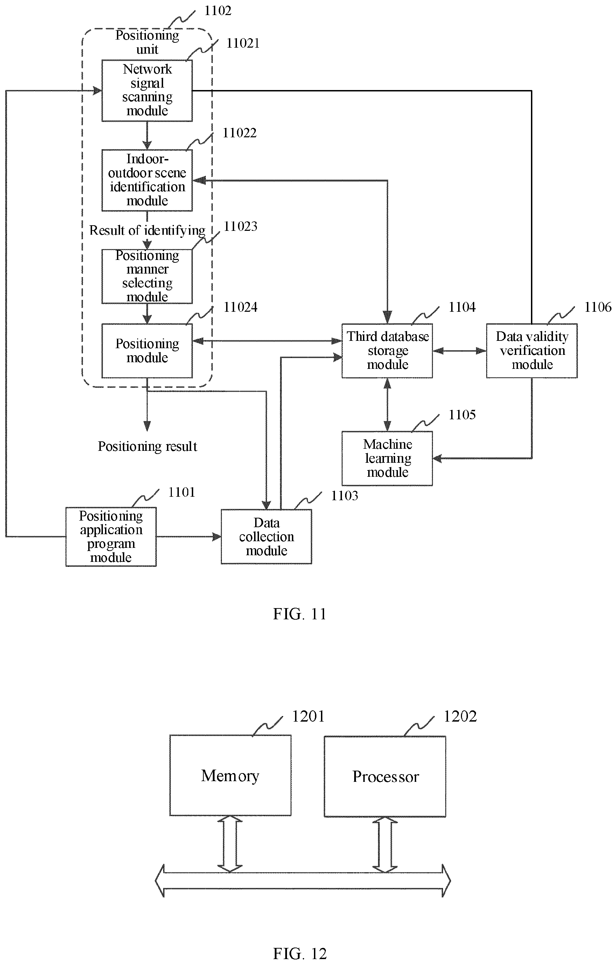

Referring to FIG. 11, FIG. 11 is a schematic flowchart of an apparatus for positioning a mobile terminal provided by an embodiment of the present disclosure. The apparatus for positioning a mobile terminal includes:
a positioning application program module 1101, configured for triggering a positioning unit 1102 to perform positioning;
the positioning unit 1102, configured for performing the positioning;
a data collection module 1103, configured for collecting positioning information of the positioning unit 1102 and storing the positioning information in the third database;
a third database storage module 1104, configured for storing historical positioning data and a machine learning result;
a machine learning module 1105, configured for, when a data volume of the historical positioning data reaches a configured threshold, performing machine learning to obtain a machine learning result, setting a validity time threshold of the machine learning result, and storing the machine learning result and the validity time threshold in the third database, where the machine learning result includes positioning information and indoor-outdoor scene information;
a data validity verification module 1106, configured for detecting validity of the machine learning result in the third database; when the validity time threshold of the machine learning result is not met, notifying the machine learning module 1105 to perform the machine learning; comparing the current machine learning result with the machine learning result stored in the first database; if the current machine learning result is consistent with the machine learning result stored in the first database, resetting the validity time threshold of the machine learning result; if the current machine learning result is not consistent with the machine learning result stored in the first database, notifying the machine learning module 1105 to save the current machine learning result in the first database.

The positioning unit 1102 includes: a network signal scanning module 11021, configured for scanning a current network signal to obtain a first information sheet of the current network signal; an indoor-outdoor scene identification module 11022, configured for searching the third database according to the first information sheet, and when a second information sheet matching the first information sheet is found in the third database, identifying the indoor-outdoor scene according to satellite positioning success data and satellite positioning failure data corresponding to the second information sheet; a positioning manner selecting module 11023, configured for selecting a matched positioning manner; and a positioning module 11024, configured for performing positioning according to the selected positioning manner.

Referring to FIG. 12, FIG. 12 is a schematic flowchart of a mobile terminal device provided by an embodiment of the present disclosure. The mobile terminal device may be a smart phone, a mobile Internet of Things device, a wearable device, etc. The mobile terminal device may include a memory 1201 and a processor 1202, the memory 1201 stores a computer program, and the processor 1202 is configured for executing the computer program to implement steps of any one method for identifying an indoor-outdoor scene and/or steps of any one method for positioning a mobile terminal.

The memory 1201 may include a random access memory (RAM), or may include a non-volatile memory (NVM), for example at least one disk memory. Optionally, the memory 1201 may further be at least one storage apparatus located away from the above processor.

The above processor 1202 may be a general-purpose processor, including a central processing unit (CPU), a network processor (NP), or the like; the above processor 1202 may also be a digital signal processor (DSP), an application specific integrated circuit (ASIC), a field-programmable gate array (FPGA) or other programmable logic device, a discrete gate or transistor logic device, a discrete hardware component.

An embodiment of the present disclosure further provides a computer-readable storage medium. The storage medium stores a computer program. The computer program, when executed by a processor, implements steps of any one method for identifying an indoor-outdoor scene and/or steps of any one method for positioning a mobile terminal.

The embodiments of the apparatus/network side device/storage medium are described briefly, since they are substantially similar to the embodiment of the method, and the related contents can refer to the description of the embodiment of the method.

The relationship terms used herein, such as "first," "second," and the like are only to distinguish one entity or operation from another entity or operation, but do not necessarily require or imply that there is any actual relationship or order between these entities or operations. Moreover, the terms "include," "comprise," or any other variants thereof are intended to cover a non-exclusive inclusion, such that processes, methods, articles, or devices, including a series of elements, include not only those elements that have been listed, but also other elements that are not specifically listed or the elements intrinsic to these processes, methods, articles, or devices. Without further limitations, elements limited by the wording "include(s) a/an..." or "comprise(s) a/an..." do not exclude additional identical elements in the processes, methods, articles, or devices, including the listed elements.

The embodiments described above are simply preferable embodiments of the present disclosure, and are not intended to limit the present disclosure. Any modifications, alternatives, improvements, or the like within the spirit and principle of the present disclosure shall be included within the scope of protection of the present disclosure.

## Claims

1. A method for identifying an indoor-outdoor scene, comprising:
at a side of a mobile terminal, scanning a current network signal to obtain a first information sheet of the current network signal;
searching a first database according to the first information sheet, wherein the first database at least stores an information sheet of a wireless local area network and historical positioning data corresponding to the information sheet, and the historical positioning data at least comprises satellite positioning success data and satellite positioning failure data; and
when a second information sheet matching the first information sheet is found in the first database, identifying the indoor-outdoor scene according to the second information sheet.

2. The method of claim 1, wherein identifying the indoor-outdoor scene according to the second information sheet comprises:
if there is only the satellite positioning success data in historical positioning data corresponding to the second information sheet, determining that a result of identifying the indoor-outdoor scene is an outdoor scene;
if there is only the satellite positioning failure data in the historical positioning data corresponding to the second information sheet, determining that the result of identifying the indoor-outdoor scene is an indoor scene; and
if there are the satellite positioning success data and the satellite positioning failure data in the historical positioning data corresponding to the second information sheet, determining that the result of identifying the indoor-outdoor scene is the signal being interfered.

3. The method of claim 1, wherein the first database further stores a machine learning result corresponding to the information sheet, the machine learning result at least comprises indoor-outdoor scene information, and identifying the indoor-outdoor scene according to the second information sheet comprises:
if indoor-outdoor scene information in a machine learning result corresponding to the second information sheet indicates an indoor scene, determining that a result of identifying the indoor-outdoor scene is the indoor scene; and
if the indoor-outdoor scene information in the machine learning result corresponding to the second information sheet indicates an outdoor scene, determining that the result of identifying the indoor-outdoor scene is the outdoor scene;
wherein the indoor-outdoor scene information is determined, in a machine learning process, according to the satellite positioning success data and the satellite positioning failure data and/or according to historical satellite positioning information.

4. The method of claim 3, wherein the first database further stores a validity time threshold to record validity of the machine learning result, and identifying the indoor-outdoor scene according to the second information sheet comprises:
if the machine learning result corresponding to the second information sheet is within the validity time threshold, identifying the indoor-outdoor scene according to the machine learning result corresponding to the second information sheet; and
if the machine learning result corresponding to the second information sheet exceeds the validity time threshold, identifying the indoor-outdoor scene according to satellite positioning success data and satellite positioning failure data corresponding to the second information sheet.

5. The method of claim 4, wherein the first database further stores a total number of times of positioning and historical satellite positioning information corresponding to the information sheet, and the method further comprises:
for each information sheet in the first database, when the total number of times of positioning corresponding to the information sheet reaches a configured number of times threshold, triggering following operations to generate a machine learning result corresponding to the information sheet:
when there is no historical satellite positioning information corresponding to the information sheet, taking the indoor scene as the indoor-outdoor scene information in the machine learning result;
when there is the historical satellite positioning information corresponding to the information sheet, taking the outdoor scene as the indoor-outdoor scene information in the machine learning result; and
setting a validity time threshold of a current machine learning result.

6. A method for positioning a mobile terminal, comprising:
at a side of the mobile terminal, scanning a current network signal to obtain a first information sheet of the current network signal;
searching a second database according to the first information sheet; wherein the second database at least stores an information sheet of a wireless local area network and a machine learning result corresponding to the information sheet; the machine learning result at least comprises positioning information obtained after machine learning is performed based on historical positioning data; the historical positioning data at least comprises historical wireless local area network positioning information and historical satellite positioning information; and
when a second information sheet matching the first information sheet is found in the second database, reading positioning information in a machine learning result corresponding to the second information sheet, and taking the positioning information as a current positioning result.

7. The method of claim 6, wherein the second database further stores a validity time threshold to record validity of the machine learning result, and reading the positioning information in the machine learning result corresponding to the second information sheet, and taking the positioning information as the current positioning result, comprises:
if the machine learning result corresponding to the second information sheet is within the validity time threshold, reading the positioning information in the machine learning result corresponding to the second information sheet; and
if the machine learning result corresponding to the second information sheet exceeds the validity time threshold, performing indoor-outdoor scene identification, and selecting a positioning manner matching a result of identifying the indoor-outdoor scene to perform positioning.

8. The method of claim 7, wherein the second database further stores historical positioning data corresponding to the information sheet, the historical positioning data at least comprises satellite positioning success data and satellite positioning failure data, and identifying the indoor-outdoor scene comprises:
identifying the indoor-outdoor scene according to satellite positioning success data and satellite positioning failure data in historical positioning data corresponding to the second information sheet;
if there is only the satellite positioning success data in the historical positioning data corresponding to the second information sheet, determining that the result of identifying the indoor-outdoor scene is an outdoor scene;
if there is only the satellite positioning failure data in the historical positioning data corresponding to the second information sheet, determining that the result of identifying the indoor-outdoor scene is an indoor scene; and
if there are the satellite positioning success data and the satellite positioning failure data in the historical positioning data corresponding to the second information sheet, determining that the result of identifying the indoor-outdoor scene is the signal being interfered.

9. The method of claim 7, wherein the machine learning result further comprises indoor-outdoor scene information, and identifying the indoor-outdoor scene comprises:
if indoor-outdoor scene information in the machine learning result corresponding to the second information sheet indicates an indoor scene and is valid, determining that the result of identifying the indoor-outdoor scene is the indoor scene; and
if the indoor-outdoor scene information in the machine learning result corresponding to the second information sheet indicates an outdoor scene and is valid, determining that the result of identifying the indoor-outdoor scene is the outdoor scene;
wherein the indoor-outdoor scene information is determined according to satellite positioning success data and satellite positioning failure data and/or according to the historical satellite positioning information.

10. The method of claim 9, wherein the second database further stores a total number of times of positioning, historical satellite positioning information, and the historical wireless local area network positioning information corresponding to the information sheet, and the method further comprises:
for each information sheet in the second database, when the total number of times of positioning corresponding to the information sheet reaches a configured number of times threshold, triggering following operations to generate a machine learning result corresponding to the information sheet:
when there is no historical satellite positioning information corresponding to the information sheet, calculating a first mean value according to all historical wireless local area network positioning information corresponding to the information sheet, removing historical wireless local area network positioning information deviating from the first mean value by reaching a configured first deviation threshold, calculating a mean value of remaining historical wireless local area network positioning information as the positioning information in the machine learning result, and taking the indoor scene as the indoor-outdoor scene information in the machine learning result;
when there is the historical satellite positioning information corresponding to the information sheet, or there are the historical wireless local area network positioning information and the historical satellite positioning information corresponding to the information sheet, calculating a second mean value according to all historical satellite positioning information corresponding to the information sheet, removing historical satellite positioning information deviating from the second mean value by reaching a configured second deviation threshold, calculating a mean value of remaining historical satellite positioning information as the positioning information in the machine learning result, and taking the outdoor scene as the indoor-outdoor scene information in the machine learning result; and
setting a validity time threshold of a current machine learning result.

11. An apparatus for identifying an indoor-outdoor scene, comprising a memory and a processor, wherein the memory stores a computer program, and the processor is configured for executing the computer program to implement steps of the method for identifying an indoor-outdoor scene of any one of claims 1 to 5.

12. An apparatus for positioning a mobile terminal, comprising a memory and a processor, wherein the memory stores a computer program, and the processor is configured for executing the computer program to implement steps of the method for positioning a mobile terminal of any one of claims 6 to 10.

13. A mobile terminal device, comprising a memory and a processor, wherein the memory stores a computer program, and the processor is configured for executing the computer program to implement steps of the method for identifying an indoor-outdoor scene of any one of claims 1 to 5 and/or steps of the method for positioning a mobile terminal of any one of claims 6 to 10.

14. A computer-readable storage medium, storing a computer program, wherein the computer program, when executed by a processor, implements steps of the method for identifying an indoor-outdoor scene of any one of claims 1 to 5 and/or steps of the method for positioning a mobile terminal of any one of claims 6 to 10.
